# EUROPÄISCHE PATENTSCHRIFT

(11) **EP 1 140 556 B1**
(45) Veröffentlichungstag und Bekanntmachung des Hinweises auf die Patenterteilung: **12.01.2005**
(21) Anmeldenummer: 00975967.1
(22) Anmeldetag: 31.10.2000
(51) Int. Cl.: B60N 2/16, B60N 2/42

(54) **FAHRZEUGSITZ MIT HÖHENEINSTELLER**
VEHICLE SEAT WITH HEIGHT ADJUSTER
SIEGE DE VEHICULE A SYSTEME DE REGLAGE EN HAUTEUR

(30) Priorität: 09.11.1999 DE 19953630
(43) Veröffentlichungstag der Anmeldung: 10.10.2001
(73) Patentinhaber: KEIPER GmbH & Co. KG, 67657 Kaiserslautern (DE)
(72) Erfinder: MÜHLBERGER, Joachim, 67269 Grünstadt (DE); TEUFEL, Ingo, 67806 Rockenhausen (DE)
(74) Vertreter: Patentanwälte Hosenthien-Held und Dr. Held
(86) Internationale Anmeldenummer: PCT/EP2000/010692
(87) Internationale Veröffentlichungsnummer: WO 2001/034427

(56) Entgegenhaltungen:
- DE-A- 4 129 497
- US-A- 3 848 923
- US-A- 5 556 159

## Beschreibung

Die Erfindung betrifft einen Fahrzeugsitz, insbesondere einen Kraftfahrzeugsitz, mit den Merkmalen des Oberbegriffs des Anspruches 1.

Bei bekannten Fahrzeugsitzen werden im Crashfall die auftretenden Kräfte vom Sitzrahmen über den Höheneinsteller in die Fahrzeugstruktur weitergeleitet. Dies belastet insbesondere bei motorisch betätigbaren Höheneinstellern deren Antrieb, der sich in der Regel zwischen dem Sitzrahmen und einem beweglichen Teil des Höheneinstellers befindet. In der US 5,556,159 A wird für einen Fahrzeugsitz der eingangs genannten Art eine exzentrisch gelagerte Schwungmasse vorgeschlagen, welche im Crashfall ausgelenkt wird und ab einer bestimmten Grenzlast in Anlage an das übernächste Getriebglied des Höheneinstellers gelangt und mit dieses unter Überbrückung des dazwischen angeordneten Getriebeglieds kraftschlüssig sperrt. Die US 3,848,923 A beschreibt einen Neigungseinsteller, bei dem eine zusätzliche Zahnrad-Klinken-Verriegelung ebenfalls durch eine Schwungmasse aktiviert wird.

Der Erfindung liegt die Aufgabe zu Grunde, einen Fahrzeugsitz der eingangs genannten Art zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Durch die alternative Kraftübertragung zwischen dem Sitzrahmen und der Fahrzeugstruktur können die Crashkräfte vom Sitzrahmen beispielsweise direkt in die Sitzschienen und damit in den Fahrzeugboden als Teil der Fahrzeugstruktur geleitet werden. Dadurch wird ein zwischen Sitzrahmen und Höheneinsteller wirkender Antrieb für den Höheneinsteller entlastet und vor Zerstörung geschützt. Unter dem Begriff "Sitzrahmen" sollen dabei auch andere Arten von Sitzkissenträgern und Rückenlehnenträgern verstanden werden. Durch die Auslegung der Sperrvorrichtung für eine Kraftübertragung im Crashfall unterscheidet sich die Crashsperre von einfachen Zusatzverriegelungen, welche nur ein Öffnen der jeweiligen Hauptverriegelungen verhindern sollen. Die Sperrvorrichtung ist vorzugsweise so ausgebildet, daß die Crashsperre unabhängig von der eingestellten Höhe der Fahrzeugsitzes anspricht, und zwar jeweils etwa gleich schnell. Die Aktivierung erfolgt bei Überschreiten einer Grenzlast, indem die jeweilige Crashsperre dann beispielsweise verriegelt.

Die Crashsperre wird durch eine Geometrieänderung innerhalb des Höheneinstellers aktiviert. Ist der Höheneinsteller als Koppelgetriebe ausgelegt, so kann eine - vorzugsweise elastische und daher reversible - Deformation des Höheneinstellers innerhalb eines Viergelenks - tunnelseitig oder schwellerseitig - oder zwischen den beiden Viergelenken auftreten. Beispiele für reversible Crashsperrenaktivierungen sind Federelemente oder Grenzkraftgesperre mit einem Rückstellelement. Die zur Deformation des Höheneinstellers erforderliche Kraft entspricht besagter Grenzkraft.

Mit dem Grenzkraftgesperre zur Aktivierung der Crashsperre legt im Normalzustand der Sperrvorrichtung eine beweglich gelagerte, federbelastete Sperrklinke einen Lagerbolzen einer Schwinge des Höheneinstellers fest. Im Crashfall gibt die Sperrklinke - bei Überschreiten der Grenzlast - den Lagerbolzen zu einer Verschiebung in einer Kulissenführung frei, wodurch die Geometrieänderung des Höheneinstellers erfolgt, die dann die Crashsperre aktiviert.

Die Federkraft, welche die Ansprechschwelle des Grenzkraftgesperres verkörpert, und die Anordnung der Kulissenführung hängen von der Ausführung der Höheneinstellkinematik und der auftretenden Crashlasten ab. Über den gesamten Höheneinstellbereich und für jeden Lastfall (Frontcrash und Heckcrash) muß das Grenzkraftgesperre eindeutig entriegeln und die Crashsperre verriegeln können. Eine Auslegung des Grenzkraftgesperres im Bereich der Selbsthemmung und bestimmte Kulissenführungen werden deshalb nicht verwirklicht.

Vorzugsweise sind zwei Crashsperren vorgesehen, die in zwei unterschiedliche Lastrichtungen wirksam und damit lastfallunabhängig sind, d.h. sowohl bei einem Frontcrash als auch bei einem Heckcrash wirksam sind, jedoch bei Gebrauchslasten und Mißbrauchslasten deaktiviert bleiben.

In einer bevorzugten Ausführungsform befindet sich die lastübertragende Crashsperre zwischen dem Höheneinsteller und dem Sitzrahmen, wobei entweder am Höheneinsteller oder am Sitzrahmen wenigstens eine beweglich gelagerte Zahnklinke und am jeweils anderen Teil ein zugeordnetes Zahnelement vorgesehen ist, welche im Crashfall miteinander in Eingriff gelangen. Für den Frontcrash und für den Heckcrash sind vorzugsweise je eine Zahnklinke und je ein zugeordnetes Zahnelement vorgesehen. Vorzugsweise üben die beiden dadurch gebildeten Verzahnungen im Crashfall gegenseitig keine austreibenden Kräfte aufeinander aus. Die Unterteilung in zwei getrennte, lastrichtungsabhängige Crashsperren hat den Vorteil, daß eine lastniveau-angepaßte Dimensionierung und eine axiale Sicherung durch Schachtelung der im Eingriff befindlichen Crashsperren realisierbar sind.

In einer besonders bevorzugten Ausführungsform sind das Grenzkraftgesperre für die Aktivierung und die Crashsperren für die Lastübertragung Teile einer gemeinsamen Sperrvorrichtung, beispielsweise indem die Sperrklinke und die Zahnklinken an einem gemeinsamen, beweglich gelagerten Hebel vorgesehen sind. Die Herstellung der Sperrvorrichtung vereinfacht sich dadurch und wird kostengünstiger.

Im folgenden ist die Erfindung anhand eines in der Zeichnung dargestellten Ausführungsbeispiels näher erläutert. Es zeigen
- Fig. 1: eine Teilansicht der rechten Außenseite des Ausführungsbeispiels im Bereich der hinteren Schwinge ohne Darstellung des Sitzrahmens,
- Fig. 2: eine Teilansicht der zugehörigen Innenseite ohne Darstellung der hinteren Schwinge und des Sitzrahmens im Normalzustand,
- Fig. 3: eine schematisch dargestellte, rechte Seitenansicht des Ausführungsbeispiels,
- Fig. 4: eine Fig. 2 entsprechende Ansicht mit Darstellung der hinteren Schwinge im Falle eines Frontalcrashs,
- Fig. 5: eine vergrößertes Ansicht des Bereichs V in Fig. 4, und
- Fig. 6: eine entsprechend Fig. 5 vergrößerte Ansicht der nach außen gewandten Seite des zugehörigen Bereichs.

Ein als Fahrersitz eines Kraftfahrzeuges ausgebildeter Fahrzeugsitz 1 weist als Längseinsteller auf seinen beiden Seiten je eine Oberschiene 3 auf, die in Fahrzeuglängsrichtung verschiebbar in einer fahrzeugstrukturfesten Unterschiene 5 geführt ist. Als Höheneinsteller sind an jeder Oberschiene 3 vordere und hintere Schwingen 7 bzw. 9 mit einem unteren Ende angelenkt. Mit dem oberen Ende sind die Schwingen 7 und 9 an einem Sitzrahmen 10 angelenkt, welcher das Sitzkissen und die Rükkenlehne des Fahrzeugsitzes 1 trägt. Der Übersichtlichkeit halber ist im folgenden die rechte, tunnelseitige Fahrzeugsitzseite beschrieben. Die linke, schwellerseitige Fahrzeugsitzseite ist entsprechend aufgebaut.

Um die hintere Schwinge 9 an der Oberschiene 3 anzulenken, weist die Oberschiene 3 einen nach oben abstehenden. laschenförmigen Adapter 11 auf. Ein waagrecht angeordneter, unterer Lagerbolzen 13 ist in dem Adapter 11 drehbar gelagert. Im Normalzustand ist der untere Lagerbolzen 13 ungefähr in der Mitte einer langlochförmigen Kulissenführung 15 der hinteren Schwinge 9 angeordnet und mittels eines später beschriebenen Grenzkraftgesperres an der hinteren Schwinge 9 festgelegt. Mittels eines oberen Lagerbolzens 19, der sich je nach eingestellter Höhe mehr oder weniger oberhalb und in Fahrtrichtung hinter dem unteren Lagerbolzen 13 befindet, ist die hintere Schwinge 9 am Sitzrahmen 10 angelenkt.

Etwas oberhalb und in Fahrtrichtung vor dem unteren Lagerbolzen 13 ist ein Klinkenbolzen 21 an der hinteren Schwinge 9 angebracht. der parallel zu den beiden Lagerbolzen 13 und 19 ausgerichtet ist. Auf dem Klinkenbolzen 21 ist auf der nach außen gewandten Seite der hinteren Schwinge 9 ein Klinkenhebel 23 schwenkbar gelagert. Der untere Arm des Klinkenhebels 23 trägt eine Sperrklinke 25, die in eine Aufnahme 13' greift, welche in einem ringförmigen Flansch des unteren Lagerbolzens 13 vorgesehen ist. Eine Sperrfeder 27 ist mit einem Ende um den Klinkenbolzen 21 gewickelt und greift mit dem anderen Ende am Klinkenhebel 23 so an, daß die Sperrklinke 25 in die Aufnahme 13' des unteren Lagerbolzens 13 gedrückt wird. Bis zu einer bestimmten Grenzlast, die bei Gebrauchs- und Mißbrauchslasten nicht überschritten wird, ist das Grenzkraftgesperre kraftschlüssig arretiert, d.h. die in Richtung der Kulissenführung 15 wirkende Kraftkomponente, die eine austreibende Kraft auf die Sperrklinke 25 ausübt, wird durch Haftreibung und durch die Kraft der Sperrfeder 27 kompensiert. Der untere Lagerbolzen 13 ist daher relativ zur hinteren Schwinge 9 unverdrehbar und unverschiebbar innerhalb der Kulissenführung 15 angeordnet, so daß durch dieses Drehgelenk die hintere Schwinge 9 unter Mitnahme des unteren Lagerbolzens 13 relativ zur Oberschiene 3 verschwenkbar ist.

Der obere Arm des Klinkenhebels 23 trägt eine erste und eine zweite Zahnklinke 31 bzw. 33. Die erste Zahnklinke 31 ist dabei einstückig mit dem Klinkenhebel 23 ausgebildet, während die zweite Zahnklinke 33 aus einem flachen, auf der Außenseite des Klinkenhebels 23 angebrachten Metallstück besteht. Die sägezahnförmigen Zähne der beiden Zahnklinken 31 und 33 weisen beide ungefähr in Richtung des oberen Lagerbolzens 19, jedoch sind die Zähne der ersten Zahnklinke 31 leicht nach unten orientiert, während die Zähne der zweiten Zahnklinke 33 leicht nach oben weisen.

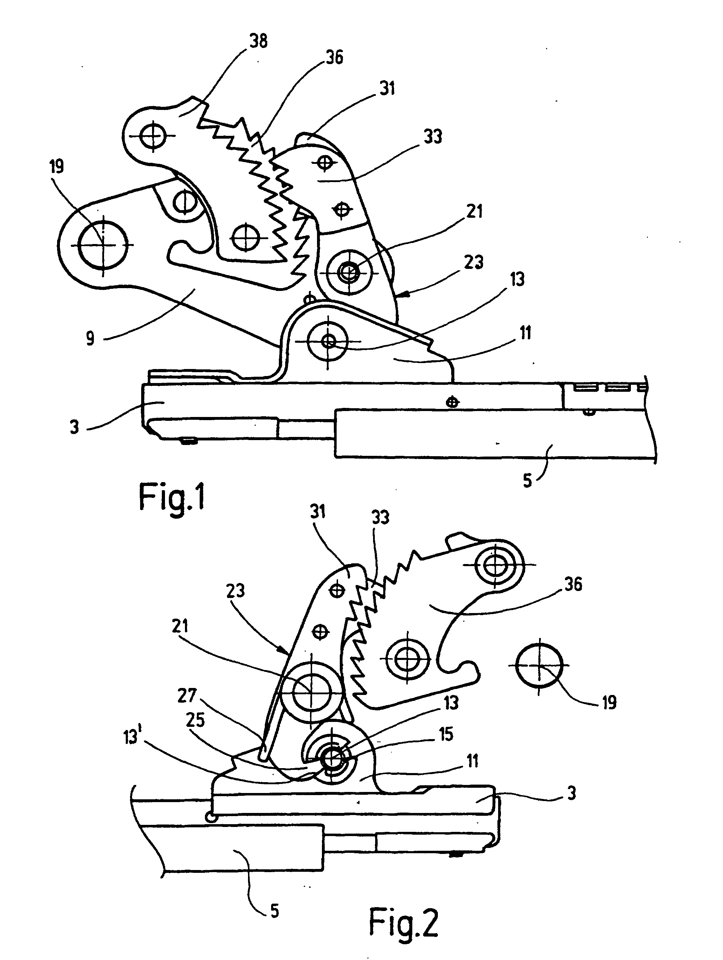

In einem kleinen Abstand von diesen beiden Zahnklinken 31 und 33 weist der Sitzrahmen 10 einen ersten und einen zweiten Zahnbogen 36 und 38 auf, die flach nebeneinander angeordnet sind, deren Krümmungsmittelpunkt der obere Lagerbolzen 19 ist und deren sägezahnförmige Zähne radial nach außen zu den beiden Zahnklinken 31 und 33 weisen. Die Zähne des ersten Zahnbogens 36 weisen dabei leicht nach oben, während die Zähne des zweiten Zahnbogens 38 leicht nach unten weisen. Befindet sich der Fahrzeugsitz 1 in der tiefsten Stellung, so sind die beiden Zahnklinken 31 und 33 auf das obere Ende der beiden Zahnbögen 36 und 38 ausgerichtet. Befindet sich der Fahrzeugsitz 1 hingegen in der höchsten Stellung, so sind die beiden Zahnklinken 31 und 33 auf das untere Ende der beiden rahmenfesten Zahnbögen 36 und 38 ausgerichtet. Die Fig. 1 und 2 zeigen eine mittlere Stellung.

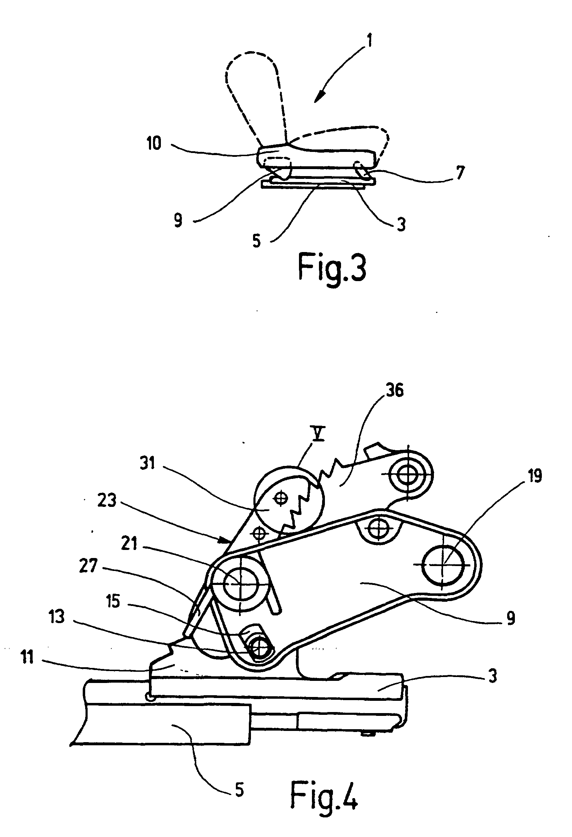

Bei einem Frontcrash wird der Oberbau des Fahrzeugsitzes 1 mit dem Sitzrahmen 10, den darauf angebrachten weiteren Teilen des Fahrzeugsitzes 1 und dem Benutzer relativ zum Unterbau des Fahrzeugsitzes 1 mit den Schienen 3 und 5 nach vorne beschleunigt. Zunächst werden die auftretenden Kräfte über die Schwingen 7 und 9 zur Oberschiene 3 und weiter über die Unterschiene 5 in die Fahrzeugstruktur geleitet. Die auf die hintere Schwinge 9 wirkende Kraft übersteigt dabei die von der Kraft der Sperrfeder 27 und des Keilwinkels der Sperrklinke 25 abhängige Grenzlast des Grenzkraftgesperres, d.h. die Sperrklinke 25 wird aus der Aufnahme 13' herausgedrückt. Die hintere Schwinge 9 bewegt sich mit ihrer Kulissenführung 15 relativ zum unteren Lagerbolzen 13 nach unten, so daß der untere Lagerbolzen 13 in Anlage an das obere Ende der Kulissenführung 15 gelangt. Die Geometrie des Höheneinstellers ändert sich dadurch. Durch das Herausdrücken der Sperrklinke 25 schwenkt der Klinkenhebel 23 um den Klinkenbolzen 21. Dadurch gelangt die erste Zahnklinke 31 in Eingriff mit dem ersten Zahnbogen 36, wie in Fig. 4 dargestellt, und bildet eine Crashsperre. Durch die gekrümmte Form des ersten Zahnbogens 36 mit näherungsweise konstantem Abstand der Zahnklinke 31 in der Ausgangsstellung hängt diese Aktivierung der Crashsperre (und die Ansprechdauer) nicht von der eingestellten Höhe des Fahrzeugsitzes 1 ab. Die vom Sitzrahmen 10 ausgeübten Kräfte werden zum einen über den oberen Lagerbolzen 19 und zum anderen über den ersten Zahnbogen 36, die erste Zahnklinke 31 des Klinkenhebels 23 und den Klinkenbolzen 21 auf die hintere Schwinge 9 und von dieser über den unteren Lagerbolzen 13 auf den Adapter 11 der Oberschiene 3 geleitet. Dies entlastet den zwischen hinterer Schwinge 9 und Sitzrahmen 10 wirkenden Antrieb des Höheneinstellers.

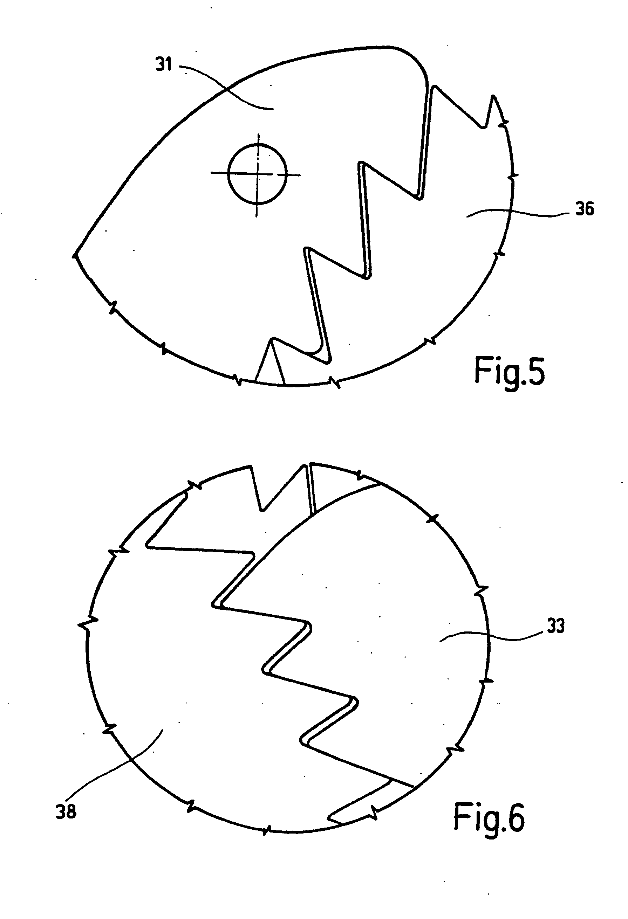

Bei einem Heckcrash wird entsprechend der Unterbau des Fahrzeugsitzes 1 relativ zum Oberbau nach vorne beschleunigt. Die Grenzlast des Grenzkraftgesperres wird ebenfalls überschritten, wobei der untere Lagerbolzen 13 frei gegeben wird und an das untere Ende der Kulissenführung 15 gelangt, wodurch sich die Geometrie des Höheneinstellers ändert. Der Klinkenhebel 23 schwenkt ebenfalls, wobei nun die zweite Zahnklinke 33 in Eingriff mit dem zweiten Zahnbogen 38 gelangt, eine weitere Crashsperre bildet, und einen Teil der auftretenden Kräfte weiterleitet. Die Crashsperren sind hinsichtlich der Winkelverhältnisse zwischen den Zähnen so ausgelegt, daß beim Heckcrash keine austreibenden Kräfte von der ersten (Frontcrash-) Verzahnung 31 und 36 auf die zweite (Heckcrash-) Verzahnung 33 und 38 ausgeübt werden und umgekehrt. Die Situation beim Frontcrash ist aus den Fig. 5 und 6 ersichtlich.

### Bezugszeichenliste

- 1: Fahrzeugsitz
- 3: Oberschiene
- 5: Unterschiene
- 7: vordere Schwinge
- 9: hintere Schwinge
- 10: Sitzrahmen
- 11: Adapter
- 13: unterer Lagerbolzen
- 13': Aufnahme
- 15: Kulissenführung
- 19: oberer Lagerbolzen
- 21: Klinkenbolzen
- 23: Klinkenhebel
- 25: Sperrklinke
- 27: Sperrfeder
- 31: erste Zahnklinke
- 33: zweite Zahnklinke
- 36: erster Zahnbogen
- 38: zweiter Zahnbogen

## Patentansprüche

1. Fahrzeugsitz, insbesondere Kraftfahrzeugsitz, mit einem Höheneinsteller (7, 9) zur Einstellung der Höhe eines Sitzrahmens (10) des Fahrzeugsitzes (1) relativ zur Fahrzeugstruktur und einer Sperrvorrichtung (13, 23, 36, 38), welche wenigstens eine bei Überschreiten einer Grenzlast aktivierte Crashsperre (31, 33, 36, 38) aufweist, die im Crashfall eine alternative Kraftübertragung zwischen dem Sitzrahmen (10) und der Fahrzeugstruktur zur Verfügung stellt, **dadurch gekennzeichnet, daß** im Normalzustand der Sperrvorrichtung (13, 23, 36, 38) eine beweglich gelagerte, federbelastete Sperrklinke (25) der Sperrvorrichtung (13, 23, 36, 38) einen Lagerbolzen (13) einer Schwinge (9) des Höheneinstellers (7, 9) bis zur Grenzlast festlegt und bei Überschreiten der Grenzlast im Crashfall zur Bewegung in einer Kulissenführung (15) freigibt, wodurch eine Geometrieänderung des Höheneinstellers erfolgt, welche die Crashsperre (31, 33, 36, 38) aktiviert.

2. Fahrzeugsitz nach Anspruch 1, **dadurch gekennzeichnet, daß** zwei Crashsperren (31, 33, 36, 38) vorgesehen sind, die in zwei unterschiedlichen Lastrichtungen wirksam sind.

3. Fahrzeugsitz nach Anspruch 1 oder 2, **dadurch gekennzeichnet, daß** als Crashsperre (31, 33, 36, 38) am Höheneinsteller (7, 9) oder am Sitzrahmen (10) wenigstens eine beweglich gelagerte Zahnklinke (31, 33) vorgesehen ist, die im Crashfall mit einem zugeordneten Zahnelement (36, 38) des Sitzrahmens (10) bzw. des Höheneinstellers (7, 9) in Eingriff gelangt.

4. Fahrzeugsitz nach Anspruch 2 und 3, **dadurch gekennzeichnet, daß** für einen Frontcrash und für einen Heckcrash je eine Zahnklinke (31, 33) und je ein zugeordnetes Zahnelement (36 bzw. 38) vorgesehen sind.

5. Fahrzeugsitz nach Anspruch 4, **dadurch gekennzeichnet, daß** die beiden Verzahnungen (31 und 36 bzw. 33 und 38) im Crashfall gegenseitig keine austreibenden Kräfte aufeinander ausüben.

6. Fahrzeugsitz nach einem der Ansprüche 3 bis 5, **dadurch gekennzeichnet, daß** die Sperrklinke (25) und die Zahnklinke (31, 33) an einem gemeinsamen, beweglich gelagerten Hebel (23) vorgesehen sind.

## Claims

1. Vehicle seat, in particular a motor vehicle seat, having a height adjuster (7, 9) for adjusting the height of a seat frame (10) of the vehicle seat (1) relative to the vehicle structure, and having a locking device (13, 23, 36, 38) which has at least one crash catch (31, 33, 36, 38) which is activated when a limit load is exceeded and which, in the event of a crash, provides an alternative transmission of force between the seat frame (10) and the vehicle structure, **characterised in that**, in the normal state of the locking device (13, 23, 36, 38), a movably supported, resiliently loaded pawl (25) of the locking device (13, 23, 36, 38) secures a bearing pin (13) of a rocker (9) of the height adjuster (7, 9) up to the limit load and, when the limit load is exceeded in the event of a crash, releases the bearing pin (13) for movement in a slotted guide (15), whereby a change in the geometry of the height adjuster is brought about which activates the crash catch (31, 33, 36, 38).

2. Vehicle seat according to claim 1, **characterised in that** two crash catches (31, 33, 36, 38) are provided which are active in two different load directions.

3. Vehicle seat according to claim 1 or 2, **characterised in that** at least one movably supported toothed catch (31, 33) is provided as the crash catch (31, 33, 36, 38) on the height adjuster (7, 9) or on the seat frame (10), which toothed catch (31, 33) moves into engagement with an associated toothed element (36, 38) of the seat frame (10) or the height adjuster (7, 9) in the event of a crash.

4. Vehicle seat according to claim 2 and 3, **characterised in that** a respective toothed catch (31, 33) and an associated toothed element (36 or 38) are provided for a front-end crash and for a rear-end crash.

5. Vehicle seat according to claim 4, **characterised in that** the two tooth arrangements (31 and 36 or 33 and 38) do not apply any expelling forces on each other in the event of a crash.

6. Vehicle seat according to any one of claims 3 to 5, **characterised in that** the pawl (25) and the toothed catch (31, 33) are provided on a common, movably supported lever (23).

## Revendications

1. Siège de véhicule, en particulier siège de véhicule automobile, comprenant un dispositif de réglage en hauteur (7, 9) pour régler la hauteur d'un bâti de siège (10) du siège de véhicule (1) relativement à la structure du véhicule et un dispositif de blocage (13, 23, 36, 38) qui présente au moins un verrouillage en cas de choc (31, 33, 36, 38) activé lors du dépassement d'une charge limite et assurant en cas de choc une transmission de force alternative entre le bâti de siège (10) et la structure du véhicule, **caractérisé par le fait que**, dans l'état normal du dispositif de blocage (13, 23, 36, 38), un cliquet de blocage (25) du dispositif de blocage (13, 23, 36, 38) monté de manière mobile, commandé par ressort, fixe un tourillon de palier (13) d'une pièce oscillante (9) du dispositif de réglage en hauteur (7, 9) jusqu'à la charge limite et le libère lors du dépassement de la charge limite en cas de choc pour le déplacement dans un guidage de coulisse (15), ce qui produit une modification de géométrie du dispositif de réglage en hauteur qui active le verrouillage en cas de choc (31, 33, 36, 38).

2. Siège de véhicule selon la revendication 1, **caractérisé par le fait que** deux verrouillages en cas de choc (31, 33, 36, 38) sont prévus, qui agissent dans deux directions de charge différentes.

3. Siège de véhicule selon l'une des revendications 1 ou 2, **caractérisé par le fait que**, comme verrouillage en cas de choc (31, 33, 36, 38), il est prévu sur le dispositif de réglage en hauteur (7, 9) ou sur le bâti de siège (10) au moins un cliquet denté (31, 33) monté de manière mobile qui vient en prise en cas de choc avec un élément denté associé (36, 38) du bâti de siège (10), respectivement du dispositif de réglage en hauteur (7, 9).

4. Siège de véhicule selon l'une des revendications 2 ou 3, **caractérisé par le fait qu'**il est prévu un cliquet denté (31, 33) et un élément denté associé (36 respectivement 38) pour un choc frontal et pour un choc arrière.

5. Siège de véhicule selon la revendication 4, **caractérisé par le fait que** les deux dentures (31 et 36, respectivement 33 et 38) n'exercent l'une sur l'autre aucune force d'expulsion en cas de choc.

6. Siège de véhicule selon l'une des revendications 3 à 5, **caractérisé par le fait que** le cliquet de blocage (25) et le cliquet denté (31, 33) sont prévus sur un levier commun (23), monté de manière mobile.
